# FASCICULE DE BREVET EUROPEEN

(11) **EP 2 229 259 B1**
(45) Date de publication et mention de la délivrance du brevet: **26.07.2017**
(21) Numéro de dépôt: 08852597.7
(22) Date de dépôt: 19.11.2008
(51) Int. Cl.: B23K 23/00, E01B 29/42

(54) **MOULE POUR SOUDURE ALUMINOTHERMIQUE A COULEE DIRECTE**
FORM ZUM ALUMINIUM-THERMOSCHWEISSEN MIT DIREKTEM GUSS
MOULD FOR DIRECT-CAST ALUMINOTHERMIC WELDING

(30) Priorité: 20.11.2007 FR 0759174
(43) Date de publication de la demande: 22.09.2010
(73) Titulaire: Railtech International, 59590 Raismes (FR)
(72) Inventeur: WINIAR, Lionel, 59790 Ronchin (FR); BOMMART, Patrick, 92500 Rueil-Malmaison (FR)
(74) Mandataire: Regimbeau
(86) Numéro de dépôt international: PCT/EP2008/065851
(87) Numéro de publication internationale: WO 2009/065864

(56) Documents cités:
- DE-C1- 19 819 706
- FR-A- 2 890 668

## Description

L'invention concerne un moule pour la soudure aluminothermique de poutres et/ou de rails métalliques mutuellement alignées longitudinalement, qui comporte plusieurs pièces en matériau réfractaire rigide susceptible d'être assemblées temporairement autour de deux abouts transversaux de poutres / rails à souder.

Le document FR 2 890 668 (voir aussi DE-C1-19819706) décrit un tel moule dont les pièces définissent ensemble une empreinte de moulage, ouverte vers le haut, agencé pour recevoir par coulée un métal de soudure à l'état liquide et enveloppant les deux abouts, un intervalle ménagé entre eux et une première zone de chaque rail, immédiatement voisine de l'about correspondant, pour communiquer une forme déterminée au métal de soudure pendant sa solidification, ainsi que deux portées continues agencées pour prendre appui contre une deuxième zone de chaque rail immédiatement voisine de la première zone de celui-ci, à l'opposé de l'about correspondant par rapport à cette première zone.
En particulier, le document FR 2 890 668 décrit, dans un mode de réalisation, que les pièces, réalisées en sable aggloméré pour faciliter leur destruction après un usage unique, sont principalement au nombre de trois, à raison:
- de deux moitiés supérieures du moule approximativement identiques, qui constituent l'image spéculaire l'une de l'autre par rapport à un plan longitudinal moyen commun aux deux rails à assembler et qui enveloppent, d'un côté respectif de ces deux rails, des zones de ces derniers et de l'intervalle aménagé entre eux qui correspondent au dessus du patin, à l'âme, au dessous, aux côtés et au dessus du champignon, et
- d'une pièce inférieure ou de fond, présentant la forme générale d'une plaque qui complète les deux parties supérieures en dessous du patin des rails et de la zone correspondant de l'intervalle ménagé entre eux.
Ces trois pièces sont retenues entre elles, autour des rails à assembler au moyen, généralement, d'une carcasse métallique, quant à elle réutilisable d'un moule à l'autre.
L'empreinte de moulage, ouverte vers le haut, communique dans cette direction, avec une cheminée d'amenée dont une extrémité supérieure est partiellement obstruée à l'aide d'un bouchon rapporté.
De plus, cette extrémité supérieure de la cheminée d'amenée débouche dans un bassin de coulée sur lequel est installé un creuset pour soudure aluminothermique. Ainsi, lorsque le métal de soudure à l'état liquide s'écoule du creuset, le jet de métal de soudure liquide s'écrase sur le bouchon obstruant partiellement la cheminée d'amenée puis s'écoule à vitesse réduite de part et d'autre de ce bouchon dans la cheminée d'amenée pour ensuite remplir progressivement l'empreinte de moulage.
Bien qu'un tel moule donne satisfaction quant à la qualité de la soudure, cette dernière est loin d'être optimisée.
En effet, le moule, tel que précédemment décrit , ne fait communiquer l'acier liquide de la zone du champignon avec l'acier liquide contenu dans la partie supérieure du conduit que par une ouverture disposée transversalement (la réalimentation) dont les dimensions réduites ne permettent qu'un transfert de chaleur limité du conduit vers le champignon; le réservoir de chaleur que constitue l'acier liquide se trouvant dans la partie supérieure du conduit ne contribue donc que très faiblement à ralentir la vitesse de solidification de la soudure dans la zone du champignon .

Par ailleurs, le bouchon de l'art antérieur a pour rôle de stopper le jet afin que ce dernier n'aille pas frapper directement la pièce de fond formant le fond du moule et, de ce fait, accélérer son érosion. Toutefois, cela a pour inconvénient majeur d'allonger le temps de remplissage du moule du fait de la diminution de la vitesse d'écoulement, ce qui conduit à de plus grandes pertes thermiques et au final à l'obtention d'une moins bonne refusion des abouts de rails par effet de convection de l'acier liquide de la soudure.

Un but de l'invention est de fournir un moule qui, lors d'une utilisation, permet d'obtenir une soudure optimisée et de meilleure qualité.

A cet effet, il est prévu, selon l'invention, un moule pour la soudure aluminothermique de poutres / rails métalliques comportant au moins deux pièces en matériaux réfractaires rigides sensiblement identiques et aptes à être montées temporairement en regard l'une de l'autre autour de deux abouts de poutres / rails à souder, chacune des pièces comprenant :
- une première partie inférieure comportant une face définissant une empreinte de moulage comportant vers le haut une ouverture supérieure et agencée pour recevoir par coulée du métal de soudure à l'état liquide, la face étant apte à envelopper les abouts au niveau d'un patin et d'une âme desdites poutres / rails, et un conduit de remontée de gaz et de métal de soudure à l'état liquide débouchant vers le bas dans une zone inférieure de l'empreinte de moulage et présentant vers le haut une ouverture et
- une deuxième partie supérieure, adjacente et surmontant la première partie inférieure, comportant une chambre communiquant vers le bas avec l'ouverture supérieure de l'empreinte de moulage, ouverte vers le haut, agencée pour recevoir par coulée du métal de soudure à l'état liquide et apte à contenir les abouts au niveau d'un champignon desdites poutres / rails, la chambre étant une chambre de refroidissement lent formant un volume non compartimenté dans lequel débouche l'ouverture du conduit et délimité par une paroi externe de chacune des pièces du moule et par une ouverture inférieure apte à être située sous le champignon.

Ainsi, le fait que la chambre soit une chambre de refroidissement lent apte à recevoir le champignon des poutres / rails à souder et formant un volume non compartimenté délimité par les parois externes de chacune des pièces permet, d'une part, à ce que le jet de coulée de métal de soudure à l'état liquide provenant du creuset aille directement et rapidement dans l'empreinte de moulage, réduisant au maximum les pertes thermiques et donc assurant une meilleure refusion des abouts des poutres / rails à souder lors d'un remplissage de l'empreinte de soudure, et, d'autre part, permet d'avoir une masse de métal de soudure à l'état liquide importante située autour du champignon permettant d'obtenir un refroidissement plus lent et donc d'augmenter la qualité de la soudure au niveau de la partie supérieure de la poutre / rail. De ce fait, cette chambre fonctionne de manière opposée au bassin de coulée de l'art antérieur. Ainsi, par rapport à l'art antérieur précédemment décrit, la suppression de toute paroi entre la partie supérieure du conduit et la zone du champignon permet que cette zone bénéficie alors de la chaleur emmagasinée dans la partie supérieure du conduit et permet d'obtenir une solidification lente de l'acier à cet endroit.

Avantageusement, mais facultativement, le moule de l'invention présente au moins l'une des caractéristiques suivantes:
- le volume formé par la chambre de refroidissement est un volume géométriquement convexe,
- la face est sensiblement de forme concave et comporte un bord apte à venir en contact avec une zone de la poutre / rail afin de rendre étanche l'empreinte de moulage au métal de soudure à l'état liquide, au niveau du patin et de l'âme,
- la chambre de refroidissement présente une ouverture délimitée par une surface apte à venir en contact avec une zone de la poutre / rail afin de rendre étanche la chambre de refroidissement au métal de soudure à l'état liquide au niveau du champignon,
- chaque pièce du moule comporte une troisième partie, adjacente et surmontant la deuxième partie supérieure, comprenant un bassin de déversement apte à recevoir des moyens de coulée d'un creuset pour soudure aluminothermique et situé dans un prolongement de l'ouverture supérieure de la chambre de refroidissement par l'intermédiaire de moyens de communication du bassin de déversement avec ladite chambre de refroidissement;
- le moule comporte une troisième pièce en matériau réfractaire rigide destinée à être placée au dessous du patin au niveau des abouts de chaque poutre / rail et comportant une face supérieure définissant un fond de l'empreinte de moulage,
- la face supérieure de la troisième pièce est sensiblement plane et est apte à venir en contact avec une face inférieure du patin,
- le matériau réfractaire rigide de la troisième pièce est plus réfractaire que le matériau réfractaire des deux premières pièces,
- le matériau réfractaire rigide de la troisième pièce est constitué principalement d'alumine; et,
- le matériau réfractaire rigide est un sable aggloméré.

D'autres caractéristiques et avantages de l'invention apparaîtront lors de la description ci-après d'un mode de réalisation d'un moule selon l'invention. Aux dessins annexés:

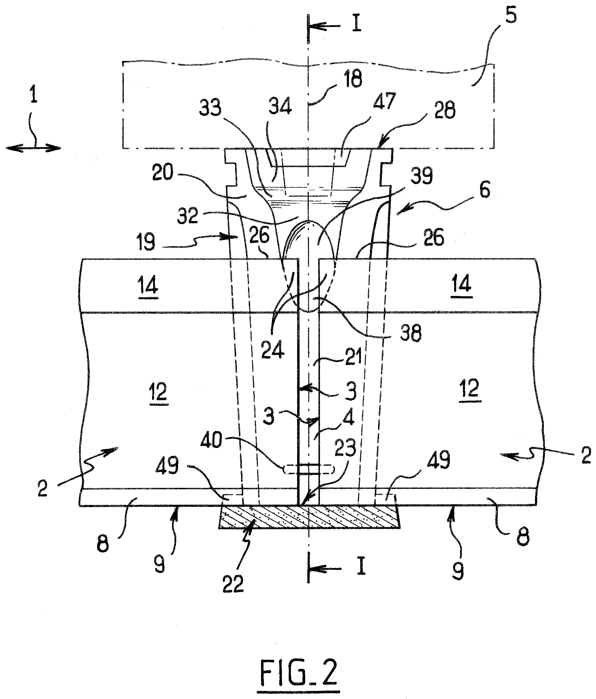

- la figure 1 est une vue d'un moule selon l'invention comportant trois pièces, le moule étant vu à l'état assemblé sur les abouts de deux rails de chemin de fer à souder entre eux et en coupe par rapport à un plan transversal de symétrie entre ces deux abouts, tels que représentés en I-I à la figure 2;
- la figure 2 est une vue du moule de la figure 1 en coupe par un plan longitudinal de symétrie commun aux deux rails, quant à eux représentés en élévation, et repérés en II-II à la figure 1,

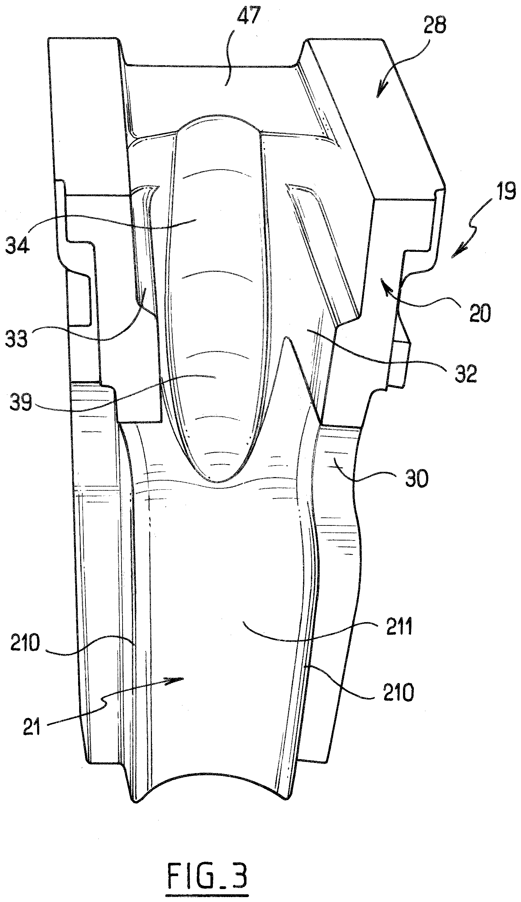

- la figure 3 est une vue en trois dimensions d'une des pièces d'un moule selon l'invention,

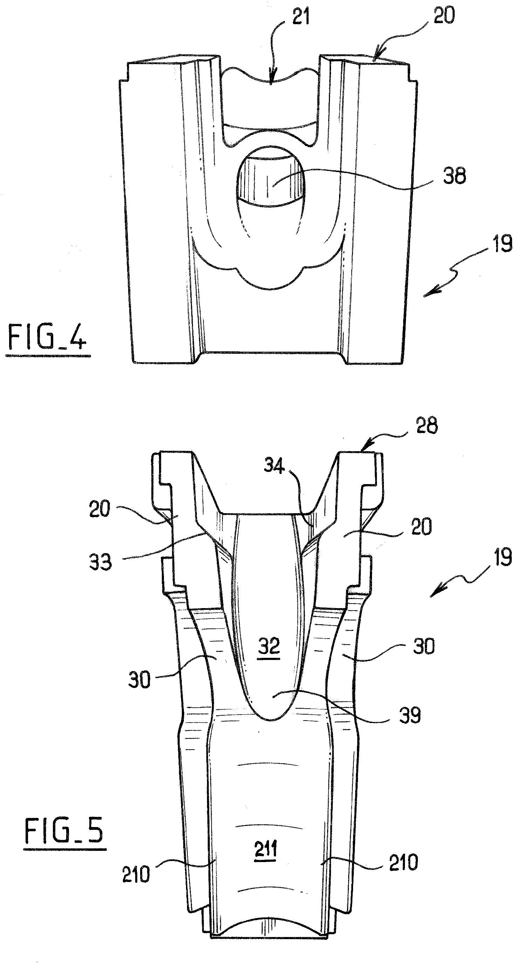

- les figures 4 et 5 sont des vues de dessus et de côté de la pièce du moule de la figure 3.

Dans le mode de réalisation d'un moule 6 selon l'invention illustré aux différentes figures annexées, ce sont deux rails 2 de chemin de fer que le moule 6 décrit est amené à en permettre une soudure.

Il est considéré ici comme une direction longitudinale, une direction 1 selon laquelle les deux rails 2 assemblés mutuellement par soudure se présentent au moins à proximité immédiate des abouts 3 à souder mutuellement, abouts 3 qui présentent l'un vers l'autre à cet effet et qui forment entre eux un intervalle continu 4, de valeur longitudinale déterminée (de l'ordre de 35 mm par exemple), destiné à être comblés par un métal de soudure fourni à l'état liquide, par réaction aluminothermique à l'intérieur d'un creuset 5 dont la nature est indifférente au regard de l'invention, mais qui peut être par exemple du type à usage unique, et posé directement sur le moule 6 selon l'invention, d'une façon connue en elle-même et décrite dans le brevet européen EP 0 407 240 auquel il est possible de référer pour de plus amples informations à cet égard.

Dans la description qui va suivre, le moule 6, selon l'invention, est adapté à la soudure mutuelle de rails 2 de type Vignole, présentant une symétrie respective par rapport à un plan longitudinal 7 qui se confond avec le plan de coupe II-II, au moins de façon localisée à proximité des abouts 3. Il est bien entendu possible de réaliser, conformément à l'invention, des moules destinés à la soudure d'autres types de rails (à gorge ou de type "Broca", à double champignon, etc...), ou à tout type de poutre, en particulier et sans limitation aux poutres dites IPN.

Quoiqu'il en soit, une telle poutre / rail comporte trois parties longitudinales, pouvant être respectivement symétriques par rapport au plan 7 (comme cela est ici illustré aux figures annexées) et réalisées d'une seule pièce, à savoir:
- d'un patin plat 8 d'orientation générale perpendiculaire au plan 7, délimité par une face inférieure plane ou dessous 9 qui coupe perpendiculairement le plan 7,
- d'une âme plate 12 disposée suivant le plan 7, au dessus du patin 8, et
- d'un champignon 14 de section approximativement rectangulaire, oblong perpendiculairement au plan 7.

Les notions de dessus et de dessous s'entendent ici par référence à une position de service des rails 2, dans lesquels le plan 7 présente une orientation approximativement verticale et constitue l'orientation dans laquelle s'effectue la soudure.

En vue de leur soudure mutuelle, les abouts 3 de rails 2 sont éventuellement dressés, par exemple à la tronçonneuse, pour être plats et perpendiculaires au plan 7, et placés face à face, dans une relation de parallélisme mutuel et de symétrie mutuel par rapport à un plan transversal 18 qui se confond avec le plan de coupe I-I, en respectant l'intervalle 4 précité, dans lequel le métal de soudure à liquide est coulé, en provenance du creuset 5, avant de laisser ce métal de soudure se solidifier pour réaliser la soudure. Le moule 6 selon l'invention a pour rôle de retenir le métal ainsi coulé alors qu'il se présente encore à l'état liquide et, de le conformer de façon recherchée au fur et à mesure de sa solidification.

Pour cela, le moule 6 comporte, ici illustré, trois pièces principales, à savoir de deux pièces ou moitiés supérieures 19, approximativement identiques, respectivement symétriques approximativement par rapport au plan 18 et mutuellement symétriques par rapport au plan 7, le long duquel au niveau d'une partie supérieure des pièces ou moitiés supérieures 19 elles sont mutuellement jointives par une face plane 20 respective au dessus du champignon 14 des rails 2 lors d'une mise en place du moule 6 selon l'invention autour de ces derniers, alors que chacune d'entre elles présente en dessous de ce champignon 14, orientée principalement vers le plan 7, au niveau d'une inférieure des pièces ou moitiés supérieures 19 adjacentes à la partie supérieure, une face respective 21 conformée pour envelopper chacun des deux rails, à proximité des abouts 3, et l'intervalle 4, dans des zones correspondant au patin et à l'âme des rails destinés à être soudés, à l'exception de la face inférieure 9 du patin 8, respectivement de part et d'autre du plan 7, par rapport auquel les faces 21 sont mutuellement symétriques. Entre la face 20 et la face 21, chacune des pièces ou moitiés supérieures 19 comporte une ouverture délimitée par une surface 30 conformée pour envelopper chacun des deux rails, à proximité des abouts 3 dans les zones correspondant au champignon 14 des rails 2 destinés à être soudés, respectivement de part et d'autre du plan 7, par rapport auquel les surfaces 30 sont symétriques mutuellement.

En regard de la face inférieure 9 du patin 8, les pièces ou moitiés supérieures 19, sont complétées par une troisième pièce, ou pièce de fond, 22 présentant la forme générale d'une plaque perpendiculaire au plan 7 et délimitée vers le haut par une face supérieure 23 conformée, d'une façon qui sera détaillée par la suite, de façon à venir en appui sur la face inférieure 9 du patin 8 des deux rails à proximité des abouts 3, ainsi qu'en regard de la zone correspondante de l'intervalle 4, et à se raccorder, dans le sens d'un éloignement par rapport au plan 7, à la limite inférieure de chacune des faces 21 pour délimiter avec ces dernières, autour de l'intervalle 4 et d'une zone respective 24 de chaque rail 2 au niveau de l'âme 12 et du patin 9, directement adjacente à son about 3, une empreinte de moulage 25 fermée de façon étanche au métal de soudure à l'état liquide, par un appui continu d'un bord 211 délimitant une surface 210 sensiblement concave des faces 21, d'une part, et, d'autre part, de la face 23 contre les deux rails dans une zone 26 respective de ces rails 2 situées longitudinalement à l'opposé de l'about 3 par rapport à la zone 24 précitée, logée ainsi à l'intérieure de l'empreinte de moulage 25.

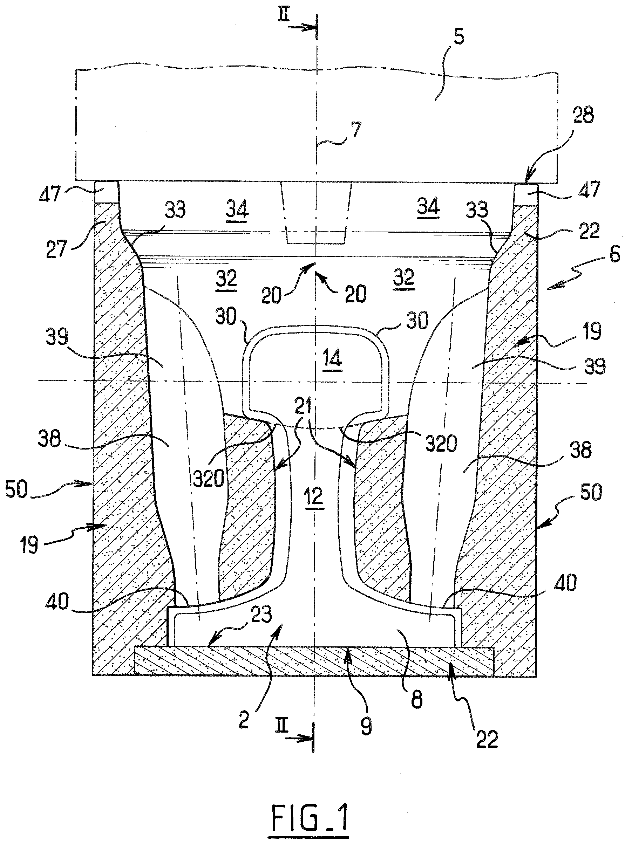

Chacune des pièce 19 et 22 présente par ailleurs une forme indifférente au regard de la présente invention, cette forme s'inscrivant par exemple dans un parallélépipède rectangle respectif, mais définissant de préférence, par une face supérieure plane respective 28 de chacune des pièces ou moitiés supérieures 19, perpendiculaire au plan 18 et approximativement perpendiculaire au plan 7, une face supérieure du moule 6, propre à porter directement le creuset 5 conformément aux enseignements du document EP 0 407 240 précité, les deux faces 28 forment entre elles un dièdre d'angle d'une valeur différente de 180° dans un but d'auto-centrage du creuset 5 conformé de façon complémentaire. Au niveau de la partie supérieure de chacune des moitiés supérieures 19 du moule 6, cette dernière est creusée, dans ses faces 20 et 28 ainsi que dans la surface 30 en regard d'une face supérieure au dessus du champignon 14 des rails 2 et à la zone correspondante de l'intervalle 4, par une moitié respective d'une chambre de refroidissement 32 du métal de soudure à l'état liquide, en provenance du creuset 5, vers l'empreinte de moulage 25. Chacune des moitiés de la chambre de refroidissement étant approximativement symétriques par rapport au plan 18 et ces deux moitiés étant mutuellement symétriques par rapport au plan 7, la chambre de refroidissement 32 présente une symétrie d'ensemble par rapport à un axe défini par l'intersection de ces plans 18 et 7, et débouche ainsi suivant cet axe, d'une part, vers le haut dans la face supérieure 28 et, d'autre part, vers le bas dans l'empreinte de moulage 25 par une embouchure respectivement supérieure 34 et inférieure 320 correspondant à l'ouverture supérieure de l'empreinte de moulage 25, l'une et l'autre d'axe précité. Cette embouchure inférieure 320 est ici matérialisée sur la figure 1 par une ligne pointillée.
Par ailleurs, la chambre de refroidissement 32 est délimitée par une paroi externe 27 de chacune des pièces ou moitiés supérieures 19 du moule 6. Cette paroi 27 présente une épaisseur minimale permettant de maintenir l'intégrité des pièces ou moitiés supérieures 19 lors de leur fabrication, de leur transport, de leur utilisation ainsi que lors de la coulée de métal de soudure à l'état liquide. En pratique et par exemple, cette épaisseur est de l'ordre de 1 cm à 1,5 cm environ. Cela permet à la chambre de refroidissement 32 de présenter un volume optimisé par rapport à la forme générale de chacune des pièces ou moitiés supérieures 19 du moule 6.
D'autre part, ce volume n'est pas compartimenté, c'est-à-dire qu'il n'y a pas de paroi réalisée en matériau réfractaire qui s'étende en saillies à l'intérieur de la chambre de refroidissement, ni de présence d'obstacles en matériau réfractaire rigide comme un bouchon tel que décrit dans la technique antérieure représentée par le document FR 2 890 668.
De plus, la chambre de refroidissement 32, une fois le moule 6 monté autour des deux rails 2 destinés à être soudés, contient la partie supérieure des deux rails formée par le champignon 14. Ainsi, une fois le métal de soudure à l'état liquide coulé dans le moule 6, il y a une masse importante de ce métal autour du champignon remplissant la chambre de refroidissement 32.
Cette masse importante va permettre, suite à la coulée, un refroidissement lent permettant d'obtenir une soudure optimisée en qualité au niveau de la partie supérieure ou champignon 14 des deux rails ainsi soudés. De plus, la lenteur du refroidissement dans cette zone permet donc aussi d'une part d'améliorer l'acier grâce à une décantation plus longue de l'acier et d'autre part de ne solidifier au niveau du champignon qu'après que la zone de l'âme se soit solidifiée, évitant ainsi la formation de retassures au niveau de l'âme.

Dans une variante de réalisation, afin que le volume formé par la chambre de refroidissement 32 soit maximale dans la forme générale du moule 6, le volume formé par ladite chambre de refroidissement 32 est mathématiquement ou géométriquement un volume convexe. Il est entendu en géométrie qu'un volume est convexe si pour toutes paires de points {A, B} de ce volume, le segment [AB] qui les joint est entièrement contenu dans le volume.

Dans une variante de réalisation, chacune des pièces ou moitié supérieure 19 présente une troisième partie surmontant de manière adjacente la partie supérieure des pièces, ou moitié supérieure, 19 dans laquelle est creusée la chambre de refroidissement 22. Cette troisième partie comporte un bassin de déversement 34 qui présente une ouverture inférieure 33 débouchant dans la partie supérieure de la chambre de refroidissement 32. Ainsi un volume formé par le bassin de déversement 34 se trouve dans le prolongement de celui formé par la chambre de refroidissement 32. Cette ouverture 33 forme des moyens de communication du bassin de déversement 34 avec la chambre de refroidissement 32. Le bassin de déversement 34 s'étend donc de la face supérieure 28 à l'ouverture supérieure de la chambre de refroidissement 32. D'autre part, le bassin de déversement 34 présente des ouvertures 47 réalisées à travers la paroi 27 au voisinage de la face supérieure 28. Chacune des pièces ou moitiés supérieures 19 comporte, ici, une ouverture 47 réalisée dans la paroi 27 de manière symétrique par rapport au plan 18 et ouverte vers le haut au niveau de la face supérieure 28. Ces ouvertures 47 permettent l'évacuation des gaz lors de la coulée du métal de soudure à l'état liquide dans le moule, ainsi que l'évacuation du corindon lorsque la coulée est terminée, corindon issu de la réaction aluminothermique au sein du creuset 5. Le bassin de déversement 34, lors de l'utilisation du moule 6 avec un creuset 5, réceptionne des moyens de coulée du creuset 5 par lequel le métal de soudure à l'état liquide s'écoule sous la forme d'un jet dans la chambre de refroidissement 32.

La partie inférieure de chacune des pièces ou moitiés supérieures 19, en plus de comporter la face 21 délimitant l'empreinte de moulage 25, comprend un conduit 38 de forme cylindrique. En particulier, le conduit 38 est de forme cylindrique de révolution. Il s'étend de manière sensiblement verticale dans une épaisseur de matériau réfractaire rigide située entre la face 21 et une face externe 50 de la partie inférieure de chacune des pièces ou moitiés supérieures 19. L'axe principal du conduit 38 se trouve sensiblement dans le plan 18. Le conduit 38 présente dans sa partie inférieure une embouchure 40 qui donne dans la zone inférieure de l'empreinte de moulage 25 au dessus du patin 7 de chacun des rails destinés à être soudés une fois le moule monté autour de ces rails.
D'autre part, à une autre extrémité opposée du conduit 38, ce dernier présente une ouverture supérieure 39 qui fait communiquer le conduit 38 directement avec la chambre de refroidissement 32 de la partie supérieure de chacune des pièces ou moitiés supérieures 19 du moule 6. Cette ouverture 39 est située au niveau d'un raccordement entre l'âme 12 et le champignon 14 des rails et s'étend sensiblement parallèlement et en regard des côtés dudit champignon.

Concernant la troisième pièce 22 du moule 6 selon l'invention, cette pièce 22 est de forme générale parallélépipédique rectangle et présente une face supérieure 23 qui est, ici, sensiblement plane. Lors d'une mise en place du moule sur les rails 2 destinés à être soudés, la face supérieure 23 de la pièce 22 vient en appui sur la face inférieure 9 elle aussi, ici, essentiellement plane du patin 8 de chacun des rails destinés à être soudés. De manière plus générale, la face supérieure 23 du patin 9 est complémentaire de la face inférieure 9 du patin 8 avec laquelle elle est destinée à coopérer. Une telle configuration permet de ne pas obtenir, lors d'une solidification du métal de soudure introduite dans l'empreinte de moulage 25, un bourrelet s'étendant en saillies vers le bas de la face 9 du patin 8. Une telle possibilité permet d'éviter les problèmes de fatigue dus à la présence de ces bourrelets selon les techniques antérieures lorsque les rails sont destinés à être en appui, lors de leur utilisation, sur une semelle continue. Cela est rendu possible par la configuration du moule 6 selon l'invention qui permet au métal de soudure à l'état liquide d'arriver, depuis le creuset 5, directement et rapidement dans la partie inférieure de l'empreinte de coulée 25, au niveau des patins 8 des rails 2 destinés à être soudés, et ce, lors d'une coulée. En variante, la face supérieure est sensiblement concave ou présente une surface complexe.

En effet, cette arrivée rapide et directe réduit au mieux les pertes thermiques du métal de soudure à l'état liquide. Ainsi le métal de soudure à l'état liquide, une fois dans le bas de l'empreinte de moulage 25, présente une température suffisante pour refondre de manière optimale les abouts des rails au niveau du patin ce qui permet d'améliorer la qualité de la soudure au niveau dudit patin et de s'affranchir du supplément de masse que représentait le bourrelet obtenu avec les moules de la technique antérieure. En variante, au surplus, pour éviter l'érosion de la troisième pièce 22 sous l'effet du jet direct de coulée de métal de soudure à l'état liquide, cette troisième pièce 22 est réalisée dans un matériau réfractaire rigide qui est plus réfractaire que le matériau réfractaire rigide constituant les pièces ou moitiés supérieures 19. En particulier, le matériau réfractaire rigide de la troisième pièce 22 est constitué principalement d'alumine dont la teneur est comprise entre 90 et 100% environ. Le matériau réfractaire rigide des pièces ou moitiés supérieures 19 est un sable aggloméré. D'autre part, la troisième pièce 22 s'étendant aussi de la face 23 présente des protubérances 49 pour faciliter le positionnement mutuel des trois pièces 19 et 22 en s'emboîtant autour des pièces ou moitiés supérieures 19, respectivement de part et d'autre de chacune dans le sens d'un éloignement par rapport au plan 18.

En pratique, le moule 6 selon l'invention présente des dimensions réduites par rapport aux moules des techniques antérieures, en particulier aux moules tels que décrits dans le document FR 2 890 668. Cela permet d'utiliser moins de matériau réfractaire rigide pour réaliser le moule et, lors d'une utilisation pour la soudure de deux rails, il est possible d'utiliser moins de mélange aluminothermique pour réaliser la coulée tout en conservant une qualité optimale pour la soudure. Ainsi, un moule selon l'invention produit moins de déchets lorsqu'il est à usage unique. En effet, il a été constaté qu'entre un moule de la technique intérieure et un moule selon l'invention, tous deux destinés à réaliser le même type de soudure, le moule selon l'invention est d'un poids environ 30% inférieur que le moule selon la technique antérieure alors que la masse de mélange d'aluminothermie peut être, quant à elle, réduite de 10% environ.

Enfin, le moule selon l'invention, est utilisable, sans conséquence sur sa mise en oeuvre et sur la qualité de la soudure obtenue, dans des situations où les deux rails à souder sont inclinés, comme cela peut se présenter dans des courbes pour les voies de chemin de fer. En effet, la puissance du jet à la sortie des moyens de coulée du creuset est telle que ce jet est dévié de manière tout à fait imperceptible sous l'effet de la gravité quand ce jet atteint la troisième pièce du fond du moule selon l'invention. Dans le cas de réalisation de voies de chemin de fer, cette inclinaison peut atteindre 10% environ.

Bien entendu, il est possible de porter à l'invention de nombreuses modifications sans sortir du cadre de celle-ci.

## Revendications

1. - Moule (6) pour la soudure aluminothermique de poutres / rails métalliques (2) comportant au moins deux pièces (19, 22) en matériau réfractaire rigide sensiblement identiques et aptes à être montées temporairement en regard l'une de l'autre autour de deux abouts (3) de poutres / rails à souder, chacune des pièces comprenant:
∘ une première partie inférieure comportant une face (21) définissant une empreinte de moulage (25) comportant vers le haut une ouverture supérieure et agencée pour recevoir par coulée du métal de soudure à l'état liquide, la face (21) étant apte à envelopper les abouts (3) au moins au niveau du patin (8) et d'une âme (12) desdit(e)s poutres /rails (2), et un conduit (38) de remontée de gaz et de métal de soudure à l'état liquide débouchant vers le bas dans une zone inférieure de l'empreinte de moulage (25) et présentant vers le haut une ouverture (39), et
∘ une deuxième partie supérieure, adjacente et surmontant la première partie inférieure, comportant une chambre (32) communiquant vers le bas avec l'ouverture supérieure de l'empreinte de moulage (25) ouverte vers le haut, agencée pour recevoir par coulée du métal de soudure à l'état liquide et apte à contenir les abouts (3) au niveau d'un champignon (14) desdit(e)s poutres / rails (2),
**caractérisé en ce que** la chambre (32) est une chambre de refroidissement lent formant un volume non compartimenté dans lequel débouche l'ouverture (39) du conduit (38) et délimitée par une paroi externe (27) de chacune des pièces du moule (19) et par une ouverture inférieure (320) apte à être située sous le champignon (14).

2. - Moule selon la revendication 1, **caractérisé en ce que** le volume formant la chambre de refroidissement (32) est un volume géométriquement convexe.

3. - Moule selon l'une des revendications 1 à 2, **caractérisé en ce que** la face (21) est sensiblement de forme concave et comporte un bord (211) apte à venir en contact avec une zone (26) de la poutre / rail (2) afin de rendre étanche l'empreinte de moulage (25) au métal de soudure à l'état liquide, au niveau du patin (9) et de l'âme (12).

4. - Moule selon l'une des revendications 1 à 3, **caractérisé en ce que** la chambre de refroidissement présente une ouverture délimitée par une surface (30) apte à venir en contact avec une zone (26) de la poutre / rail (2) afin de rendre étanche la chambre de refroidissement l'empreinte de moulage (32) au métal de soudure à l'état liquide, au niveau du champignon (14).

5. - Moule selon l'une des revendications 1 à 4, **caractérisé en ce que** chacune des pièces comporte en outre une troisième partie, adjacente et surmontant la deuxième partie supérieure, comprenant un bassin de déversement (34) apte à recevoir des moyens de coulée d'un creuset (5) pour soudure aluminothermique et situé dans un prolongement de l'ouverture supérieure de la chambre de refroidissement (32) par l'intermédiaire de moyens de communication (33) du bassin de déversement (34) avec la chambre de refroidissement (32).

6. - Moule selon l'une des revendications 1 à 5, **caractérisé en ce qu'**il comporte en outre une troisième pièce (22) en matériau réfractaire rigide destinée à être placée au dessous du patin (8) au niveau des abouts de chaque poutre / rail (2) et comportant une face supérieure (23) définissant un fond de l'empreinte de moulage (25).

7. - Moule selon la revendication 6, **caractérisé en ce que** la face supérieure (23) de la troisième pièce (22) est sensiblement plane et est apte à venir en contact avec une face inférieure (9) du patin (8).

8. - Moule selon la revendication 6 ou 7, **caractérisé en ce que** le matériau réfractaire rigide (18) de la troisième pièce (22) est plus réfractaire que le matériau réfractaire rigide des deux premières pièces (19).

9. - Moule selon l'une des revendications 6 à 8, **caractérisé en ce que** le matériau réfractaire rigide de la troisième pièce (22) est constitué principalement d'alumine.

10. - Moule selon l'une des revendications 1 à 9, **caractérisé en ce que** le matériau réfractaire rigide est un sable aggloméré.

## Patentansprüche

1. Form (6) zum aluminothermischen Schweißen von Balken/Schienen (2) aus Metall, aufweisend mindestens zwei Teile (19, 22) aus starrem feuerfesten Material, die etwa identisch sind und imstande, zeitweise einander gegenüber um zwei Enden (3) von Balken/Schienen, die zu schweißen sind, montiert zu sein, wobei jedes der Teile umfasst:
o einen ersten unteren Teil, aufweisend eine Fläche (21), die einen Formabdruck (25) definiert, aufweisend nach oben eine obere Öffnung und ausgebildet, um durch Gießen Schweißmetall in flüssigem Zustand aufzunehmen, wobei die Fläche (21) imstande ist, die Enden (3) mindestens im Bereich des Fußes (8) und eines Kerns (12) der Balken/Schienen (2) zu umschließen, und eine Steigleitung (38) von Gas und von Schweißmetall in flüssigem Zustand, die nach unten in eine untere Zone des Formabdrucks (25) ausmündet und nach oben eine Öffnung (39) aufweist, und
∘ einen zweiten oberen Teil, benachbart zum und über dem ersten unteren Teil, aufweisend eine Kammer (32), die nach unten mit der oberen Öffnung des nach oben offenen Formabdrucks (25) kommuniziert, ausgebildet, um durch Gießen Schweißmetall in flüssigem Zustand aufzunehmen und imstande ist, die Enden (3) im Bereich eines Kopfs (14) der Balken/Schienen (2) zu enthalten,
**dadurch gekennzeichnet, dass** die Kammer (32) eine Langsamkühlkammer ist, die ein nicht unterteiltes Volumen bildet, in welches die Öffnung (39) der Leitung (38) ausmündet und von einer Außenwand (27) jedes der Teile der Form (19) und von einer unteren Öffnung (320) begrenzt ist, die imstande ist, unter dem Kopf (14) zu liegen.

2. Form nach Anspruch 1, **dadurch gekennzeichnet, dass** das die Kühlkammer (32) bildende Volumen ein geometrisch konvexes Volumen ist.

3. Form nach einem der Ansprüche 1 bis 2, **dadurch gekennzeichnet, dass** die Fläche (21) etwa konkav ist und einen Rand (211) aufweist, der imstande ist, mit einer Zone (26) des Balkens/der Schiene (2) in Kontakt zu kommen, um den Formabdruck (25) für Schweißmetall in flüssigem Zustand im Bereich des Fußes (9) und des Kerns (12) abzudichten.

4. Form nach einem der Ansprüche 1 bis 3, **dadurch gekennzeichnet, dass** die Kühlkammer eine Öffnung aufweist, die von einer Oberfläche (30) begrenzt ist, die imstande ist, mit einer Zone (26) des Balkens/der Schiene (2) in Kontakt zu kommen, um die Kühlkammer des Formabdrucks (32) für Schweißmetall in flüssigem Zustand im Bereich des Kopfs (14) abzudichten.

5. Form nach einem der Ansprüche 1 bis 4, **dadurch gekennzeichnet, dass** jedes der Teile ferner einen dritten Teil benachbart und über dem zweiten oberen Teil aufweist, umfassend ein Abflussbecken (34), das imstande ist, Gussmittel eines Tiegels (5) für aluminothermisches Schweißen aufzunehmen und sich in einer Verlängerung der oberen Öffnung der Kühlkammer (32) befindet, mit Hilfe von Kommunikationsmitteln (33) des Abflussbeckens (34) mit der Kühlkammer (32).

6. Form nach einem der Ansprüche 1 bis 5, **dadurch gekennzeichnet, dass** sie ferner ein drittes Teil (22) aus starrem feuerfestem Material aufweist, das bestimmt ist, unter dem Fuß (8) im Bereich der Enden jedes Balkens/jeder Schiene (2) platziert zu sein und eine obere Fläche (23) aufweist, die einen Boden des Formabdrucks (25) definiert.

7. Form nach Anspruch 6, **dadurch gekennzeichnet, dass** die obere Fläche (23) des dritten Teils (22) etwa eben ist und imstande ist, mit einer unteren Fläche (9) des Fußes (8) in Kontakt zu kommen.

8. Form nach Anspruch 6 oder 7, **dadurch gekennzeichnet, dass** das starre feuerfeste Material (18) des dritten Teils (22) feuerfester als das starre feuerfeste Material der zwei ersten Teile (19) ist.

9. Form nach einem der Ansprüche 6 bis 8, **dadurch gekennzeichnet, dass** das starre feuerfeste Material des dritten Teils (22) hauptsächlich aus Aluminiumoxid besteht.

10. Form nach einem der Ansprüche 1 bis 9, **dadurch gekennzeichnet, dass** das starre feuerfesten Material ein agglomerierter Sand ist.

## Claims

1. A mould (6) for aluminothermic welding of metal beams/rails (2) including at least two essentially identical components (19, 22) in rigid refractory material and able to be temporarily fitted opposite each other around two beam/rail ends (3) to be welded, each of the components comprising:
∘ a first lower part including a face (21) defining a mould cavity (25) including, toward the top, an upper opening and arranged to receive, by casting, welding metal in liquid state, the face (21) being able to surround the ends (3) at least at the level of the foot (8) and a core (12) of the beams/rails (2), and a recovery channel (38) for gas and welding metal in liquid state leading downward in a lower zone of the mould cavity (25) and having, toward the top, an opening (39), and
∘ a second upper part, adjacent and topping the first lower component, including a chamber (32) downwardly communicating with the upper opening of the mould cavity (25) open toward the top, arranged to received, by casting, welding metal in liquid state and able to contain the ends (3) at the level of a head (14) of the beams/rails (2),
**characterized in that** the chamber (32) is a slow cooling chamber forming a non-compartmentalized volume in which the opening (39) of the channel (38) leads, and bounded by an external wall (27) of each of the components of the mould (19) and by a lower opening (320) able to be situated under the head (14).

2. The mould according to claim 1, **characterized in that** the volume forming the cooling chamber (32) is a geometrically convex volume.

3. The mould according to one of claims 1 to 2, **characterized in that** the face (21) is essentially concave and includes an edge (211) able to come into contact with a zone (26) of the beam/rail (2) in order to seal the mould cavity (25) to the welding metal in liquid state, at the level of the foot (9) and the core (12).

4. The mould according to one of claims 1 to 3, **characterized in that** the cooling chamber has an opening bounded by a surface (30) able to come into contact with a zone (26) of the beam/rail (2) in order to seal the cooling chamber the mould cavity (32) to the welding metal in liquid state, at the level of the head (14).

5. The mould according to one of claims 1 to 4, **characterized in that** each of the components also includes a third part, adjacent to and topping the second upper part, comprising a spill basin (34) able to receive casting means of a crucible (5) for aluminothermic welding and situated in an extension of the upper opening of the cooling chamber (32) via a means (33) connecting the spill basin (34) with the cooling chamber (32).

6. The mould according to one of claims 1 to 5, **characterized in that** it also includes a third component (22) in rigid refractory material intended to be placed below the foot (8) at the level of the ends of each beam/rail (2) and including an upper face (23) bounding a bottom of the mould cavity (25).

7. The mould according to claim 6, **characterized in that** the upper face (23) of the third component (22) is essentially planar and can come into contact with a lower face (9) of the foot (8).

8. The mould according to claim 6 or 7, **characterized in that** the rigid refractory material (18) of the third component (22) is more refractory than the rigid refractory material of the first two components (19).

9. The mould according to one of claims 6 to 8, **characterized in that** the rigid refractory material of the third component (22) is made up primarily of alumina.

10. The mould according to one of claims 1 to 9, **characterized in that** the rigid refractory material is a bonded sand.
